# EUROPEAN PATENT APPLICATION

(11) **EP 2 490 175 A1**
(43) Date of publication of application: **22.08.2012**
(21) Application number: 11382042.7
(22) Date of filing: 15.02.2011
(51) Int. Cl.: G06T 7/00

(54) **Method for calibrating and/or aligning a camera mounted in an automobile vehicle and corresponding camera**

(71) Applicant: Adasens Automotive S.L.U., 08100 Mollet del Vallès (ES)
(72) Inventor: Juanmarti Capdevila, Josep, 08480, L'Ametlla del Vallès (ES); Geli Mollfulleda, Carles, 08902, L'Hospitalet de Llobregat (ES)
(74) Representative: Curell Suñol, Marcelino

(57) **Abstract**

Method for calibrating and/or aligning a camera (C) mounted in an automobile vehicle, where camera (C) comprises an image sensor (IS) and calculation means (MC) that can calculate the value of a parameter in a region of interest (ROI) in the image, which comprises the following stages:
- align the vehicle with the pre-established image,
- capture an image, which comprises at least one part of the pre-establisehd image,
- calculate, on the basis of this image, the values of a parameter in a plurality of regions of interest (ROI),
- analyse the values of each region of interest (ROI) and compare them with pre-established values, corresponding to the ones that would be obtained if camera (C) were correctly aligned, and
- on the basis of the results of the analysis, calculate the misalignment of camera (C).

## Description

### Field of the invention

The invention relates to a method for calibrating and/or aligning a camera mounted in an automobile vehicle, where the camera comprises an image sensor that can capture an image and calculation means that can calculate the value of a parameter in a box in said image and define the size and position of the box in the image, thereby defining an area of interest (ROI, Region Of Interest), where the camera is connected to a screen arranged inside the cabin of the automobile vehicle, and sends the screen at least one part of the image. The invention also relates to a camera that can be mounted in an automobile vehicle and carries out the method according to the invention.

### State of the art

Automobile vehicles fitted with cameras usually need to calibrate and/or align them once they are mounted. This may be necessary both at the end of the vehicle assembly line and after, during vehicle maintenance operations. This is particularly important in the case where on the image captured by the camera reference guides are imposed, such as, for example, is usually the case with the cameras that provide a view of the space there is behind the vehicle, to help, for example, in parking manoeuvres. In this case they usually include reference guides that show the trajectory that the vehicle follows for a certain turning position of the wheels, the trajectory that the vehicle will follow in a maximum turn, the trajectory that the vehicle will follow when advancing in a straight line, transverse line as close as is allowed to obstacles, etc. The inevitable tolerances of mounting the camera can mean that its vision and, in particular, the positioning of the reference tracks, shown on a screen arranged in the vehicle cabin so that the driver can consult them, are incorrect and mislead the driver about the vehicle's real movement and/or the position of certain obstacles.

It is known in an extrinsic calibration technique of a camera, which consists in using a predefined external image, is arranged in a known position with respect to the vehicle. Once the camera captures the position of the image, it is possible to establish the relative position of the camera with respect to the image (and, therefore, with respect to the "outside world") so that it is possible to take the necessary steps to correct its position. To do this, an external computer is connected to the camera, so that it captures the image that the camera sends to the screen. In addition, the computer is connected to the vehicle's internal communication system. The computer calculates the actions needed to realign the camera and, if necessary, recalculates the reference guides. However this system requires said connection with the camera to receive the image that the camera sends to the screen. This connection is expensive and complex. Also, the use of an external computer adds complexity to the assembly chain. Therefore, there is the need to find a calibration and/or alignment system that does not require this connection.

Furthermore the cameras used for this type of applications usually include basic calculation means for managing the camera, and they do not have the calculation power of a computer, and therefore they cannot assume the calibration method that is currently performed by the external computer. Also, usually the image created by the camera cannot even be processed by these calculation means because it is sent directly from the image sensor to an outlet of the camera, from where the image is sent to the screen.

### Disclosure of the invention

The aim of the invention is to overcome these drawbacks. This purpose is achieved by means of a method for calibrating and/or aligning a camera mounted in an automobile vehicle of the type indicated at the beginning, characterised in that it comprises the following stages:
[a] position the vehicle so that it stays in a predetermined position in front of a pre-established image,
[b] capture an image using the camera, which comprises at least one part of the pre-established image,
[c] calculate, on the basis of the image and using the calculating means, the parameter values of a plurality of regions of interest,
[d] analyse the values of each region of interest and compare the results of the analysis with some pre-established values, corresponding to the ones that would be obtained if the camera were correctly aligned with the vehicle, and
[e] based on the result of the analysis, calculate the camera misalignment.

In fact, this way it is possible to use the calculation of a parameter calculated by the camera calculation means for calibration and/or alignment. Preferably the parameter is one of the parameters usually calculated by the calculation means to control the camera, such as the frame brightness average value (usually indicated as YAVG), the histogram, the exposure time and/or the gain. It is particularly advantageous that the parameter is the frame brightness average value.

Preferably in stage [d] the values are compared together and, with the results of the comparison, the position is determined of certain pre-established graphic elements, that exist in the pre-established image (such as for example) black lines that can be detected easily against a white background), and the position of the pre-established graphic elements is compared with some pre-established positions. This way the difference between the real position and the pre-established position will indicate the misalignment of the camera.

Alternatively, in stage [d] the values of each region of interest are compared with pre- established values for each region of interest, corresponding to the values that would be obtained if the camera were correctly aligned with the vehicle. This alternative method will be discussed in greater detail below.

Advantageously the method comprises, in addition, a stage of redefining the image that is sent to the screen taking into account the misalignment. In fact, in certain cases the image captured by the camera is sent as a whole to the screen. However, frequently, the camera selects a part of the captured image and it is only this part or "window" that is sent to the screen to be shown. In these cases it is usually possible to correct the misalignment of the camera, at least partially, by redefining the part of the image that is sent to the screen, that is, by relocating the position of the window in the complete image captured by the camera.

As already mentioned earlier, in certain cases the camera sends the screen some reference guides that it has stored in an internal memory and which are shown on the screen overlapping the image. This is usual in the cameras that provide a view of the space there is behind the vehicle, but it can also occur in other cameras, such as for example, in side cameras which show, via reference guides, the trajectory that the front part of the vehicle will follow. In these cases, preferably the method comprises, in addition, a stage of sending the results calculated from stage [e] to an external calculation unit, a stage of reconfiguring the reference guides according to the misalignments, and a stage of sending the reconfigured reference guides to the internal memory. In fact, sometimes redefining the part of the image that is sent to the screen is not enough and/or it is not possible (or even is not convenient) and so it may be necessary to modify the reference guides. To do this, in this particular alternative, an external calculation unit is used, but the original image is not sent to this external calculation unit without processing (in which case it would need the the external calculation unit to be connected directly to a video camera outlet), and instead it data is sent to it via the usual internal communication systems in automobile vehicles (such as for example the CAN bus). Also, sending the new reference guides of the external calculation unit to the camera's internal memory can be done perfectly via the usual internal communication systems in the automobile vehicles.

Alternatively it is possible that the reference guides are not stored in an internal memory, but that they are generated by the calculation means directly at all times. In this case, the method comprises preferably an additional stage of reconfiguring the reference guides according to the misalignments. This way, after the reconfiguration, the calculation means will generate the reconfigured reference guides at all times to overlap the image captured by the camera.

Preferably the parameter values are calculated in at least 4 regions of interest. As will be seen later, choosing a pre-established specific image, and dividing the image captured by the camera into four equal parts (which will be the four regions of interest) it is possible to already obtain enough information to calculate the camera misalignment.

Another advantageous way of choosing the regions of interest is by defining that at the most they have one pixel, that is, that they are just one single pixel. In this case, the value of the parameter usually has very noticeable variations according to its position with respect to the pre-established image. So, for example, a pixel which in the real image captured by the camera is on top of a black line in the pre-established image and which is on top of a white background in the real image captured by the camera, will show a very noticeable change in the calculated parameter value.

The object of the invention is also a camera that can be mounted in an automobile vehicle, which comprises an image sensor that is able to capture an image and calculation means that are able to calculate the value of a parameter in a box in the image and are able to define the size and position of the box in the image, thereby defining a region of interest (ROI), where the camera is able to be connected to a screen arranged inside the cabin of the automobile vehicle and is able to send to the screen at least one part of the image, characterised in that it comprises, in addition a calibration and/or alignment system which, in turn, comprises:
[a] analysis means that are able to analyse the parameter values of a plurality of regions of interest and compare the results of the analysis with some pre-established values, corresponding to the ones that would be obtained if the camera were correctly aligned with the vehicle, and
[b] means for determining the camera misalignment which are able to calculate the camera misalignment on the basis of the results obtained by the analysis means.

Preferably the analysis means are able to compare the values together and, with the results of the comparison, they are able to determine the position of certain pre-established graphic elements, that exist in the pre-established image, and they are able to compare the position of the pre-established graphic elements with some pre-established positions.

Alternatively, the analysis means are able to compare the values of each region of interest with the pre-established values for each region of interest, corresponding to the ones that would be obtained if the camera were correctly aligned with the vehicle.

Preferably the calibration system comprises, in addition, means for redefining the part of the image that is sent to the screen taking into account the misalignment.

Advantageously the camera comprises, in addition, a memory that is able to store reference guides and communication means with an external calculation unit, that is able to transmit, from the camera to the external calculation unit, the results of the determining means, and is able to receive reconfigured reference guides from the external calculation guide and store them in the memory.

### Brief description of the drawings

Other advantages and characteristics of the invention are appreciated from the following description, in which, preferred embodiments of the invention are described in a non-limiting manner, with reference to the accompanying drawings, in which:
Fig. 1, a diagram of a calibration and/or alignment system according to the state of the art.
Fig. 2, a diagram of a camera.
Fig. 3, a diagram of the part of the image captured by the camera that is sent to the screen.
Fig. 4, a diagram of a camera capturing a pre-established image.
Fig. 5, the image in Fig. 4, divided into four regions of interest.
Figs. 6 to 8, a selection of the various regions of interest in Fig. 5.
Fig. 9, an image captured by a camera that is horizontally misaligned.
Figs. 10 to 12, a selection of other regions of interest.
Figs. 13 and 14, a series of diagrams of some calibration and/or alignment systems according to the invention.

### Detailed description of some embodiments of the invention

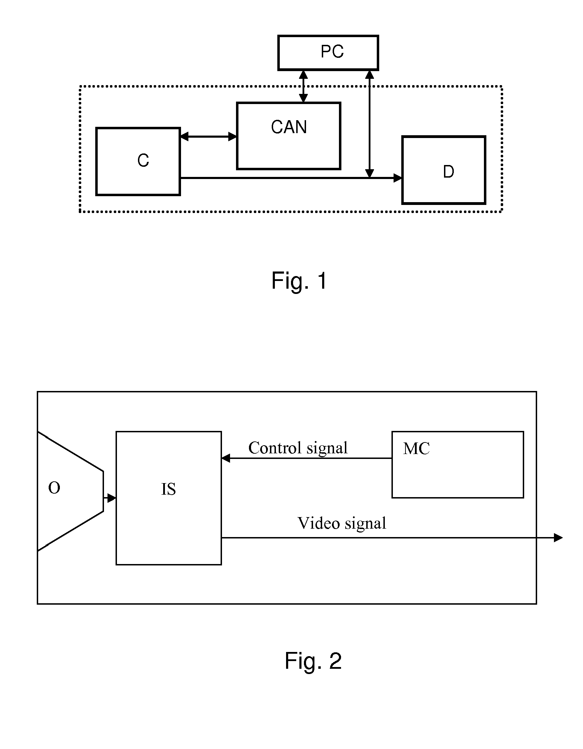

Fig. 1 shows a calibration and/or alignment system according to the state of the art. Camera C captures the pre-established image and sends the corresponding video signal to screen D. An external calculation unit PC (computer) captures the video signal and analyses it to determine the misalignment of camera C. The computer PC is connected to the vehicle communications network CAN, which, in turn, is connected to camera C.

Fig. 2 shows the configuration of a camera C that can be used in the method of this invention. It comprises optics O and an image sensor IS both controlled by means of calculation means MC (for example a microprocessor). The image sensor IS sends a video signal to an outlet, to which screen D will be connected.

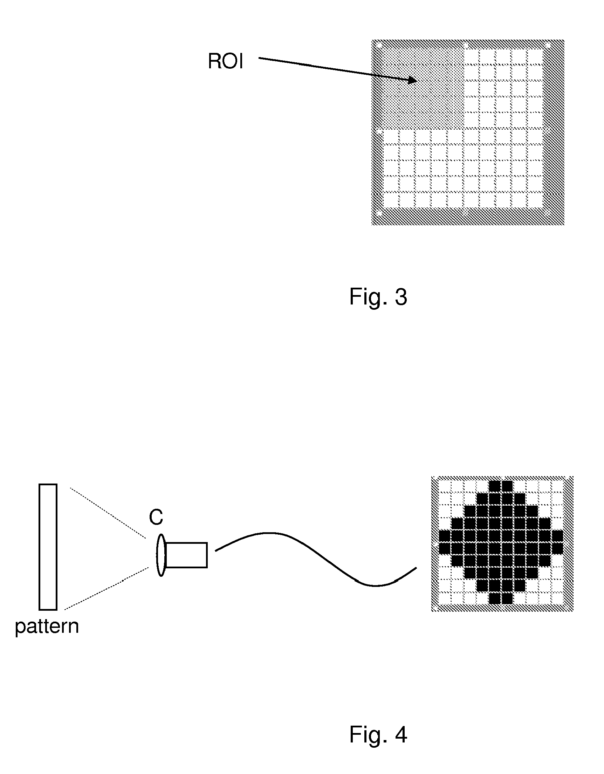

Fig. 3 shows, as a diagram, the part of the image captured by camera C which is sent to screen D. The calculating means MC can define regions of interest ROI in this image and calculate the values of various parameters in each region of interest ROI.

Fig. 4 shows an example of a camera C capturing a pre-established image. In this particular example the pre-established image is a rhombus centred in the image.

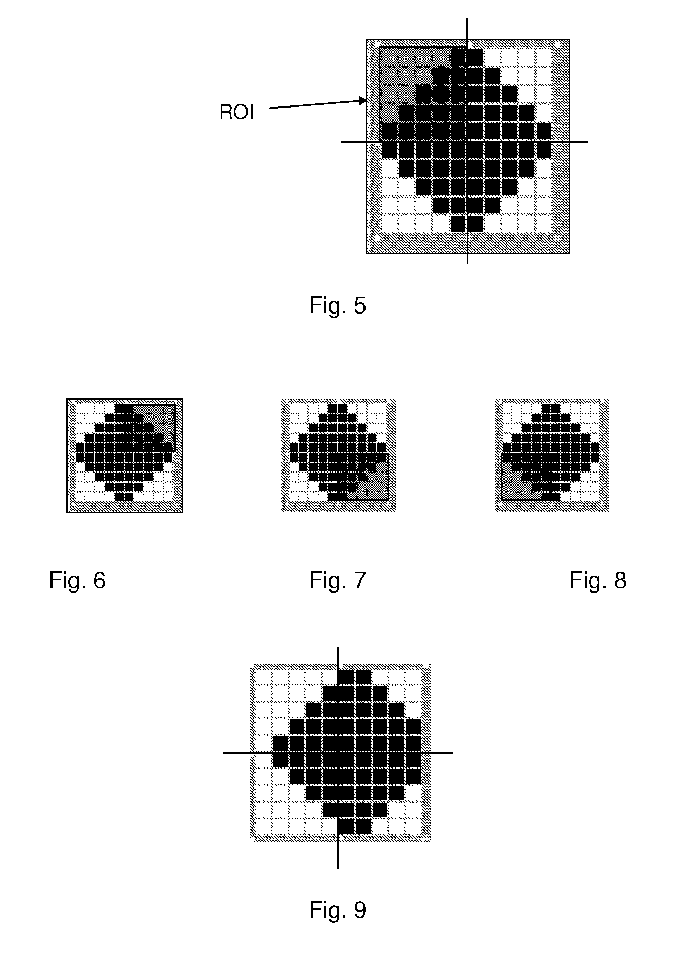

In Fig. 5 the image has been divided into four regions of interest ROI, all the same size. It can be seen that the top left region of interest ROI comprises 15 black pixels (corresponding to the part of the rhombus included in the region of interest ROI) and 10 white pixels (corresponding to the white background).

In Figs. 6 to 8, it can be seen that the other three regions of interest ROI have exactly the same proportion of black and white pixels. So, if the calculation means MC calculate, for example, the frame brightness average value of each region of interest ROI, the result obtained will be the same. However, if we consider Fig. 9, in which the image of the rhombus is shifted to the right due to a horizontal misalignment of camera C, and if we suppose that the image has been divided into the same 4 regions of interest ROI as in the previous example, then it can be appreciated that the frame brightness average values, calculated for each one, are different. In fact the two regions of interest on the left will have the same value as one another, but it will be different from the value that the other two regions of interest on the right will have. This way the direction and amount of misalignment can be determined.

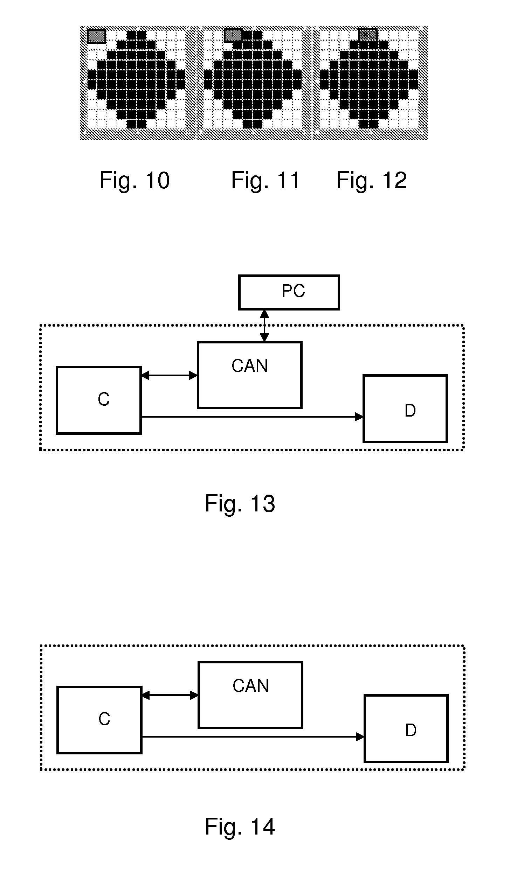

Figs. 10 to 12 show another example where the pre-established image is the same, but the regions of interest ROI are much smaller, specifically containing two pixels. In this case, the calculation means MC can scan the whole image with these 2-pixel regions of interest ROI and can determine whether or not the frame brightness average values obtained correspond to those in the centred image. In this particular example, another system could also be followed, which would consist in comparing together the frame brightness average values in the various regions of interest ROI. By detecting a significant change in value, for example the one that it would detect between the region of interest ROI in Fig. 11 and the one in Fig. 12, the calculation means MC would know the position of the border between the background and the rhombus. Then the calculation means MC could compare this position with the position that would correspond to it if the camera were correctly aligned, and on the basis of this it would be able to calculate the camera misalignment. This alternative is particularly interesting for detecting the position of dots, lines or the like, in pre-established images that contain these dots, lines or the like. Also, in these cases strategies could be considered that do not require processing all the image pixels, only the pixels needed to detect the lines or, in general, the pre-established graphic elements in the real image.

Fig. 13 shows a diagram of a calibration and/or alignment system according to the invention. Camera C is connected in a conventional way to screen D to which the video signal is sent that corresponds to the captured image and, if necessary, including the relevant reference guides, and a vehicle communication network CAN that can be a CAN bus or any other conventional network. An external computer PC is connected to this communication network CAN. Once the vehicle is suitably positioned with camera C facing the pre-established image, camera C captures a real image of the pre-estabilshed image and can calculate the misalignment of the camera by means of any of the methods indicated above. This information is sent to computer PC through the communication network CAN, and the computer PC can generate new reference guides for storing in the memory of the calculation means MC (or it can reconfigure the rules that the calculation means MC should follow to generate the modified reference guides themselves).

Fig. 14 shows a diagram of another calibration and/or alignment system according to the invention. In this case, the calculation means MC in camera C have enough calculating power to be able to perform themselves the calculations which in the option in Fig. 13 are delegated to the computer PC. In the example in Fig. 14, the participation of an external computer PC is not needed to calibrate and/or align camera C.

## Claims

1. - Method of calibrating and/or aligning a camera (C) mounted in an automobile vehicle, where said camera (C) comprises an image sensor (IS) that can capture an image and calculation means (MC) that can calculate the value of a parameter in a box in said image and that can define the size and position of said box in said image, thereby defining a region of interest (ROI), where said camera (C) is connected to a screen (D) arranged inside the cabin of said automobile vehicle and sends to said screen (D) at least one part of said image **characterised in that** it comprises the following stages :
[a] position the vehicle so that it stays in a predetermined position in front of a pre-established image,
[b] capture an image via the camera, which comprises at least one part of the pre-established image,
[c] calculate, on the basis of the image and via the calculating means, the parameter values of a plurality of regions of interest,
[d] analyse the values of each of the regions of interest and compare the results of the analysis with some pre-established values, corresponding to the ones that would be obtained if the camera were correctly aligned with the vehicle, and
[e] based on the result of the analysis, calculate the camera misalignment.

2. - Method according to claim 1, **characterised in that** said parameter is a parameter of the group made up of the frame brightness average value, histogram, exposure time and gain.

3. - Method according to claim 1, **characterised in that** said parameter is the frame brightness average value.

4. - Method according to any of the claims 1 to 3, **characterised in that** in said stage [d] said values are compared together and, with the results of the comparison, the position of certain pre-established graphic elements is determined, and the position of said pre-established graphic elements is compared with some pre-established positions.

5. - Method according to any of the claims 1 to 3, **characterised in that** in said stage [d] said values of each region of interest (ROI) are compared with some pre-established values (ROI), corresponding to the one that would be obtained if camera (C) were correctly aligned with the vehicle.

6. - Method according to any of the claims 1 to 5, **characterised in that** it comprises, in addition a stage of redefining the part of the image that is sent to said screen (D) taking into account said misalignment.

7. - Method according to any of the claims 1 to 6, where said camera (C) sends to said screen (D) some reference guides that it has stored in an internal memory and which are shown on said screen (D) overlapping said image, **characterised in that** it comprises, in addition, a stage of sending the results of the calculation in stage [e] to an external calculating unit (PC), a stage of reconfiguring said reference guides according to said misalignments, and a stage of sending the reconfigured reference guides to said internal memory.

8. - Method according to any of the claims 1 to 6, where said calculation means (MC) generate reference guides that are shown on screen (D) overlapping said image, **characterised in that** it comprises, in addition, a stage of reconfiguring said reference guides according to said misalignments.

9. - Method according to any of the claims 1 to 8, **characterised in that** the values of said parameter are calculated in at least 4 regions of interest (ROI).

10. - Method according to any of the claims 1 to 9, **characterised in that** each region of interest (ROI) has at the most one pixel.

11. - Camera (C) that can be mounted in an automobile vehicle, that comprises an image sensor (IS) that are able to capture an image and calculation means (MC) that are able to calculate a value of a parameter in a box in said image and that are able to define the size and position of said box in said image, thereby defining a region of interest (ROI), where said camera (C) is able to be connected to a screen (D) arranged inside the cabin of said automobile vehicle and is able to send to said screen (D) at least one part of said image, **characterised in that** it comprises, in addition a calibration and/or alignment system which, in turn, comprises:
[a] analysis means that are able to analyse the parameter values of a plurality of regions of interest and compare the results of the analysis with some pre-established values, corresponding to the ones that would be obtained if the camera were correctly aligned with the vehicle, and
[b] means for determining the camera misalignment which are able to calculate the camera misalignment on the basis of the results obtained by the analysis means.

12. - Camera (C) according to claim 11, **characterised in that** said analysis means are able to compare said values together and, with the results of the comparison, they are able to determine the position of certain pre-established graphic elements, and they are able to compare the position of said pre-established graphic elements with some pre-established positions.

13. - Camera (C) according to claim 11, **characterised in that** said analysis means are able to compare said values in each region of interest (ROI) with some pre-estasblished values for each region of interest (ROI), corresponding to the ones that would be obtained in camera (C) were correctly aligned with the vehicle.

14. - Camera (C) according to any of the claims 11 to 13, **characterised in that** said calibration system comprises, in addition, means for redefining the part of the image that is sent to said screen (D) taking into account said misalignment.

15. - Camera (C) according to any of the claims 11 to 14, **characterised in that** said camera (C) comprises, in addition, a memory that is able to store some reference guides and means for communicating with an external calculation unit (PC), which are able to transmit from said camera (C) to said external calculation unit (PC) the results of the determining means, and are able to receive reconfigured reference guides from said external calculation unit (PC) and store them in said memory.
